# EUROPEAN PATENT APPLICATION

(11) **EP 1 679 701 A1**
(43) Date of publication of application: **12.07.2006**
(21) Application number: 04793038.3
(22) Date of filing: 27.10.2004
(51) Int. Cl.: G11B 7/24, B41M 5/26

(54) **OPTICAL RECORDING DISK**

(30) Priority: 27.10.2003 JP 2003365881
(71) Applicant: National Institute of Advanced Industrial Science and Technology, Tokyo 100-8921 (JP); SHARP KABUSHIKI KAISHA, Osaka-shi, Osaka 545-8522 (JP); TDK Corporation, Chuo-ku, Tokyo 103-8272 (JP)
(72) Inventor: SHIMA, T., National Inst. Adv. Ind. Sci. & Tech., Tsukuba-shi, Ibaraki 3058562 (JP); TOMINAGA, J., Ntnal. Inst. Adv. Ind. Sci. & Tech., Tsukuba-shi, Ibaraki 3058562 (JP); FUJI, Hiroshi, Sharp Kabushiki Kaisha, Osaka-shi Osaka 5458522 (JP); KIKUKAWA, Takashi, TDK Corporation, Tokyo 1038272 (JP)
(74) Representative: Wiedemann, Peter
(86) International application number: PCT/JP2004/015926
(87) International publication number: WO 2005/041182

(57) **Abstract**

It is an object of the present invention to provide an optical recording disc which can record data constituted by a recording mark train including recording marks and blank regions neighboring recording marks therein and reproduce the data therefrom in a desired manner even in the case where the lengths of a recording mark and a blank region between neighboring recording marks are shorter than the resolution limit and whose storage capacity can be markedly increased.

An optical recording disc is constituted so that data are recorded therein and data are reproduced therefrom with the irradiation with a laser beam and includes a laminated body formed by laminating a decomposition reaction layer 5 containing platinum oxide as a primary component and a light absorbing layer 7 so as to sandwich a second dielectric layer 6. The optical recording disc is further constituted so that when it is irradiated with the laser beam, a bubble pit is formed in the decomposition reaction layer 5 and fine particles of platinum precipitate into the bubble pit, thereby forming a recording mark in the decomposition reaction layer 5 and each of the fine particles of platinum has a particle diameter of 2 nm to 15 nm.

## Description

### [FIELD OF THE INVENTION]

The present invention relates to an optical recording disc and, particularly, to an optical recording disc which can record data constituted by a recording mark train including recording marks and blank regions neighboring recording marks therein and reproduce the data therefrom in a desired manner even in the case where the lengths of a recording mark and a blank region between neighboring recording marks are shorter than the resolution limit and whose storage capacity can be markedly increased.

### [BACKGROUND OF THE INVENTION]

Optical recording discs such as the CD, DVD and the like have been widely used as recording media for recording digital data and a optical recording disc that offers improved recording density and has an extremely high data transfer rate has been recently developed.

In such an optical recording disc, the storage capacity of the optical recording disc is improved by reducing a wavelength λ of a laser beam used for recording and reproducing data and increasing a numerical aperture NA of an objective lens, thereby reducing the diameter of the laser beam spot.

### [DISCLOSURE OF THE INVENTION]

### [PROBLEMS TO BE SOLVED BY THE INVENTION]

In an optical recording disc, in the case where the length of a recording mark formed in the optical recording disc and the length between neighboring recording marks, namely, the length of a region (hereinafter referred to as "a blank region") where no recording mark is formed are shorter than the resolution limit, data cannot be reproduced from the optical recording disc.

The resolution limit is determined by the wavelength λ of a laser beam and the numerical aperture NA of an objective lens for converging the laser beam and in the case where the frequency of repetition of a recording mark and a blank region, namely, the spatial frequency, is equal to or larger than 2NA / λ, data recorded in the recording mark and the blank region cannot be read.

Therefore, the length of the recording mark and the blank region corresponding to the spatial frequency which can be read both become equal to or larger than λ / 4NA and in the case where an objective lens having a numerical aperture NA is used to converge a laser beam having a wavelength λ on the surface of an optical recording disc, a recording mark having a length of λ / 4NA and a blank region having a length of λ /4NA are the shortest recording mark and the shortest blank region which can be read.

Thus when data recorded in an optical recording disc are to be reproduced, there exists a resolution limit within which data can be read and the length of a recording mark and the length of a blank region which can be read are restricted. Therefore, if a recording mark having a length shorter than the resolution limit and a blank region having a length shorter than the resolution limit are formed in an optical recording disc, thereby recording data therein, the thus recorded data cannot be reproduced, so that the length of a recording mark and the length of a blank region which can be formed for recording data in an optical recording disc are inevitably restricted and a recording mark having a length shorter than the resolution limit and a blank region having a length shorter than the resolution limit are not normally formed in an optical recording disc to record data therein.

Therefore, in order to increase the storage capacity of an optical recording disc, it is required to shorten the wavelength λ of the laser beam used for reproducing data or increase the numerical aperture NA of the objective lens, thereby decreasing the resolution limit so that data consisting of a recording mark having a shorter length and a blank region having a shorter length can be reproduced.

However, there is a limit to how far the wavelength λ of the laser beam used for reproducing data can be shortened and how far the numerical aperture NA of the objective lens can be increased, so that the increase in the storage capacity of an optical recording disc that can be achieved by decreasing the resolution limit is limited.

Further, it is necessary for an optical recording disc to be constituted so that in the case of increasing the storage capacity thereof by some means or other, a reproduced signal having a good signal characteristic can be obtained when data recorded in the optical recording disc are reproduced.

It is therefore an object of the present invention to provide an optical recording disc which can record data constituted by a recording mark train including recording marks and blank regions neighboring recording marks therein and reproduce the data therefrom in a desired manner even in the case where the lengths of a recording mark and a blank region between neighboring recording marks are shorter than the resolution limit and whose storage capacity can be markedly increased.

### [MEANS FOR SOLVING THE PROBLEMS]

The above object of the present invention can be accomplished by an optical recording disc constituted so as to enable recording and reproduction of data by irradiation with a laser beam, the optical recording disc comprising a laminated body formed by laminating a decomposition reaction layer containing noble metal oxide as a primary component and a light absorbing layer so as to sandwich at least a dielectric layer and being constituted so that when it is irradiated with the laser beam, a bubble pit is formed in the decomposition reaction layer and fine particles of the noble metal precipitate into the bubble pit, thereby forming a recording mark in the decomposition reaction layer, the fine particles of the noble metal having a particle diameter of 2 nm to 15 nm.

In a study done by the inventors of the present invention, it was found that when the optical recording disc comprising a decomposition reaction layer containing noble metal oxide as a primary component was irradiated with a laser beam, a bubble pit was formed in the decomposition reaction layer and fine particles of the noble metal precipitated into the bubble pit, thereby forming a recording mark in the decomposition reaction layer and recording data in the optical recording disc, and that in the case where data were recorded in the optical recording disc in this manner, even if the lengths of a recording mark and a blank region between neighboring recording marks which constituted a recording mark train were shorter than the resolution limit, data could be reproduced from the optical recording disc.

Thus it was observed that when the optical recording disc is irradiated with the laser beam, a bubble pit is formed in the decomposition reaction layer and fine particles of the noble metal precipitate into the bubble pit, to form a recording mark in the decomposition reaction layer and record data in the optical recording disc, and in this case it is possible to reproduce the data recorded in the optical recording disc even in the case where the length of a recording mark or the length of a blank region between neighboring recording marks constituting a recording mark train is shorter than the resolution limit. Although the reason for this is not altogether clear, it is reasonable to conclude that near-field light is generated by irradiating the fine particles of noble metal with the laser beam for reproducing data and the resolution limit disappears or that the resolution limit becomes smaller due to the interaction between the fine particles of noble metal precipitated into the bubble pit and the laser beam with which the fine particles of noble metal are irradiated.

Further, when the optical recording disc is irradiated with the laser beam, the bubble pit is formed in the decomposition reaction layer and the fine particles of the noble metal precipitate into the bubble pit, thereby forming a recording mark and recording data in the optical recording disc. The present invention is configured so that the precipitated fine particles of the noble metal have a particle diameter of 2 nm to 15 nm.

In a study done by the inventors of the present invention, it was found that when the optical recording disc was irradiated with the laser beam, the bubble pit was formed in the decomposition reaction layer and the fine particles of the noble metal precipitated into the bubble pit, thereby forming a recording mark and recording data in the optical recording disc, it was possible in the case where the fine particles of the noble metal had a particle diameter of 2 nm to 15 nm to suppress the level of a noise signal contained in a signal obtained by reproducing data recorded in the optical recording disc and simultaneously suppress variation of the amplitude of the reproduced signal.

Therefore, according to the present invention, since the fine particles of the noble metal having a particle diameter of 2 nm to 15 nm precipitate into the bubble pit when data are recorded in the optical recording disc, it is possible to suppress the level of a noise signal contained in a signal obtained by reproducing data recorded in the optical recording disc and simultaneously suppress variation of the amplitude of the reproduced signal.

In the present invention, it is more preferable for the fine particles of the noble metal to have a particle diameter of 2 nm to 12 nm and it is particularly preferable for them to have a particle diameter of 2 nm to 10 nm.

In the present invention, it is preferable for the noble metal oxide contained in the decomposition reaction layer as a primary component to be decomposed into a noble metal and oxygen when the decomposition reaction layer is irradiated with the laser beam.

In the present invention, the noble metal oxide contained in the decomposition reaction layer as a primary component is not particularly limited but oxide containing at least one noble metal selected from a group consisting of Ag, Pt and Pd is preferably selected from the viewpoint of easy formation of oxide and the efficiency of generating near-field light, and platinum oxide PtOx is particularly preferable since the decomposition temperature thereof is high.

Platinum oxide PtOx has a higher decomposition temperature than those of other noble metal oxides. Therefore, when a laser beam whose power is set to that for recording data is irradiated onto the optical recording disc, thereby forming a recording mark, since it is possible to prevent heat from being diffused from the region of the decomposition reaction layer irradiated with the laser beam to other regions of the decomposition reaction layer therearound and prevent a decomposition reaction of platinum oxide PtOx from occurring at regions other than the region irradiated with the laser beam, it is possible to form a bubble pit in the decomposition reaction layer, thereby forming a recording mark.

Further, since platinum oxide PtOx has a higher decomposition temperature than those of other noble metal oxides, even in the case where a laser beam having a high power for reproducing data is irradiated onto the optical recording disc, thereby reproducing data, there is no risk of platinum oxide PtOx decomposing into platinum and oxygen. Therefore, even in the case of repeatedly reproducing data recorded in the optical recording disc, a bubble pit can be formed without change in the shape of a recording mark and a new bubble pit is not formed at regions other than a region where the recording mark is formed. Accordingly, it is possible to improve the reproduction durability of an optical recording disc.

In the present invention, it is preferable for the bubble pit formed in the decomposition reaction layer to be formed by the oxygen gas produced when the optical recording disc is irradiated with the laser beam.

In the present invention, the light absorption layer preferably contains a material having a high absorption coefficient with respect to a laser beam and low thermal conductivity and more preferably contains at least one of Sb and Te.

In the present invention, as an alloy contained in the light absorption layer and containing at least one of Sb and Te, an alloy represented by the general formula: (SbₐTe₁₋ₐ)_{1-b}M_{b} or {(GeTe)_{c}(Sb₂Te₃)_{1-c}}_{d}X_{1-d} is particularly preferable. Here, the element M represents an element other than Sb and Te and the element X represents an element other than Sb, Te and Ge.

In the case where the alloy which contains at least one of Sb and Te and is contained in the light absorption layer is represented by the general formula: (SbₐTe₁₋ₐ)_{1-b}M, it is preferable for ***a*** and ***b*** to be such that ***a*** is equal to or larger than 0 and equal to or smaller than 1 and that ***b*** is equal to or larger than 0 and equal to or smaller than 0.25. In the case where ***b*** is larger than 0.25, the light absorption coefficient of the light absorption layer becomes lower than the required value and the thermal conductivity thereof becomes lower than the required value.

The element M is not particularly limited but it is preferable for the element M to be at least one element selected from a group consisting of In, Ag, Au, Bi, Se, Al, Ge, P, H, Si, C, V, W, Ta, Zn, Mn, Ti, Sn, Pb, Pd, N, O and rare earth elements (Sc, Y and lanthanoid) as a primary component.

On the other hand, in the case where the alloy which contains at least one of Sb and Te and is contained in the light absorption layer is represented by the general formula: {(GeTe)_{c}(Sb₂Te₃)_{1-c}}_{d}X_{1-d,} it is preferable for ***c*** and ***d*** to be such that ***c*** is equal to or larger than 1/3 and equal to or smaller than 2/3 and ***d*** is equal to or larger than 0.9.

The element X is not particularly limited but it is preferable for the element M to be at least one element selected from a group consisting of In, Ag, Au, Bi, Se, Al, P, H, Si, C, V, W, Ta, Zn, Mn, Ti, Sn, Pb, Pd, N, O and rare earth elements as a primary component.

In the present invention, it is preferable for the dielectric layer and the light absorption layer to be deformed when the optical recording disc is irradiated with the laser beam, whereby the decomposition reaction layer is decomposed into noble metal and oxygen and the bubble pit is formed.

Since deformed regions of the dielectric layer and the light absorption layer have different optical characteristics from regions where they are not deformed, it is possible to further improve the C/N ratio of the reproduced signal.

### [TECHNICAL ADVANTAGES OF THE INVENTION]

According to the present invention, it is possible to provide an optical recording disc which can record data constituted by a recording mark train including recording marks and blank regions neighboring recording marks therein and reproduce the data therefrom in a desired manner even in the case where the lengths of a recording mark and a blank region between neighboring recording marks are shorter than the resolution limit and whose storage capacity can be markedly increased.

### [BRIEF DESCRIPTION OF THE DRAWINGS]

[FIGURE 1]

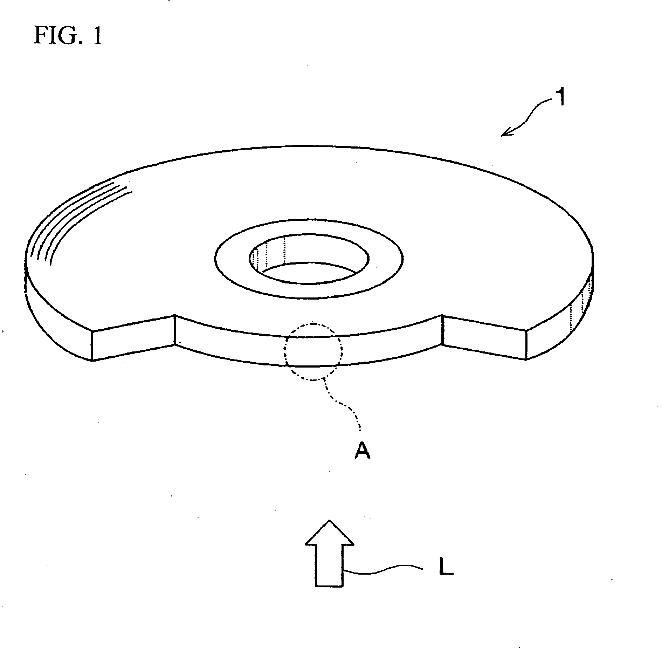

   Figure 1 is a schematic cross sectional view showing an optical recording disc that is a preferred embodiment of the present invention.
[FIGURE 2]

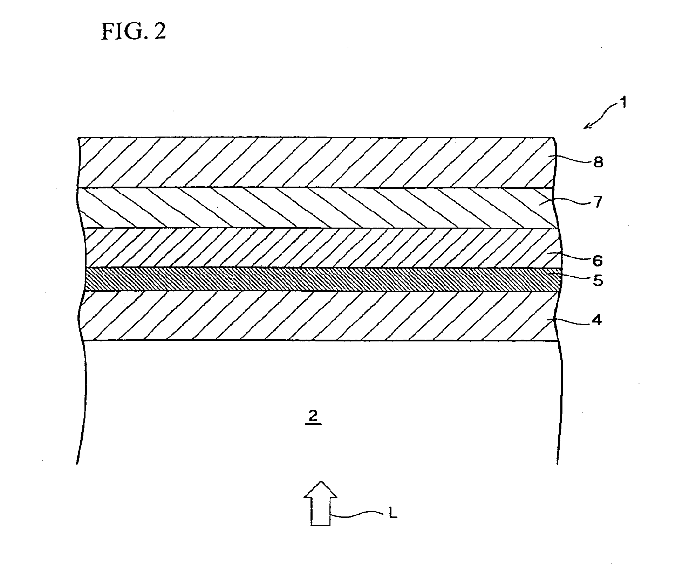

   Figure 2 is an enlarged schematic cross-sectional view of the part of the optical recording disc in Figure 1 indicated by A.
[FIGURE 3]

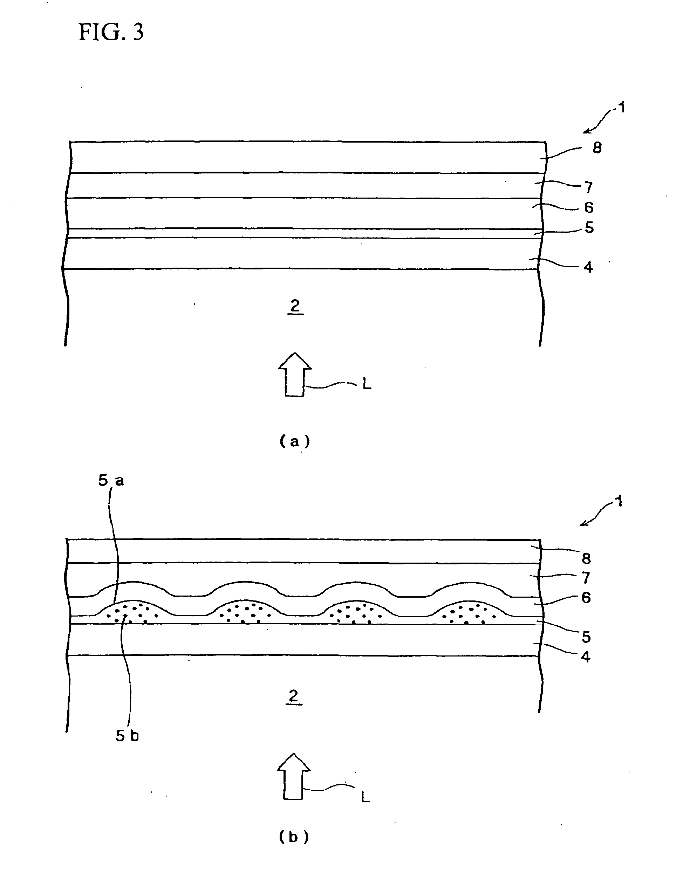

   Figure 3 (a) is a partly enlarged schematic cross-sectional view of an optical recording disc before data are recorded therein and Figure 3 (b) is a partly enlarged schematic cross-sectional view of an optical recording disc after data were recorded therein.
[FIGURE 4]

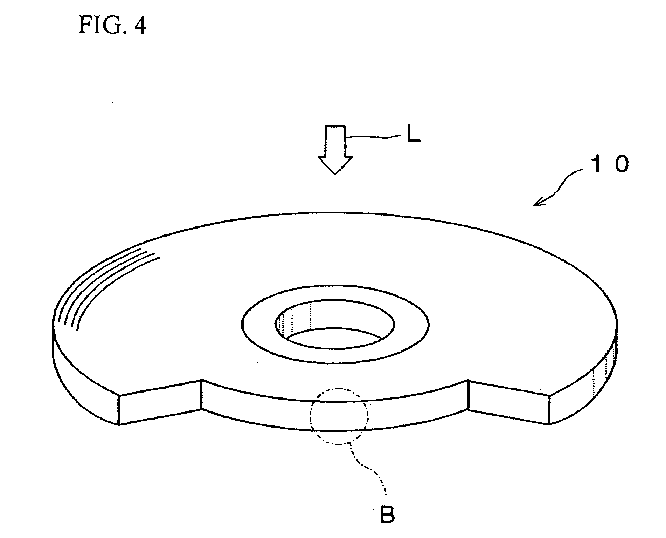

   Figure 4 is a schematic perspective view showing an optical recording disc that is another preferred embodiment of the present invention.
[FIGURE 5]

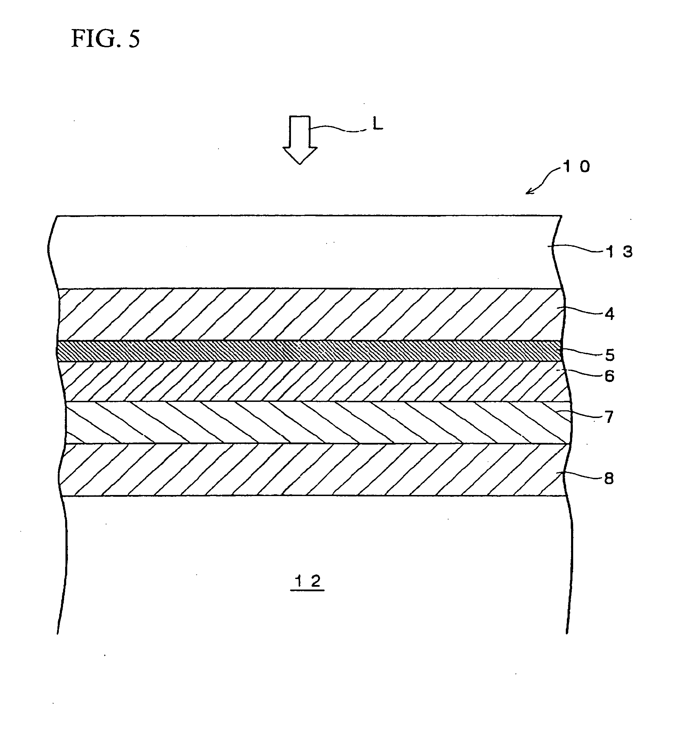

   Figure 5 is an enlarged schematic cross-sectional view of the part of the optical recording disc in Figure 4 indicated by B.
[FIGURE 6]

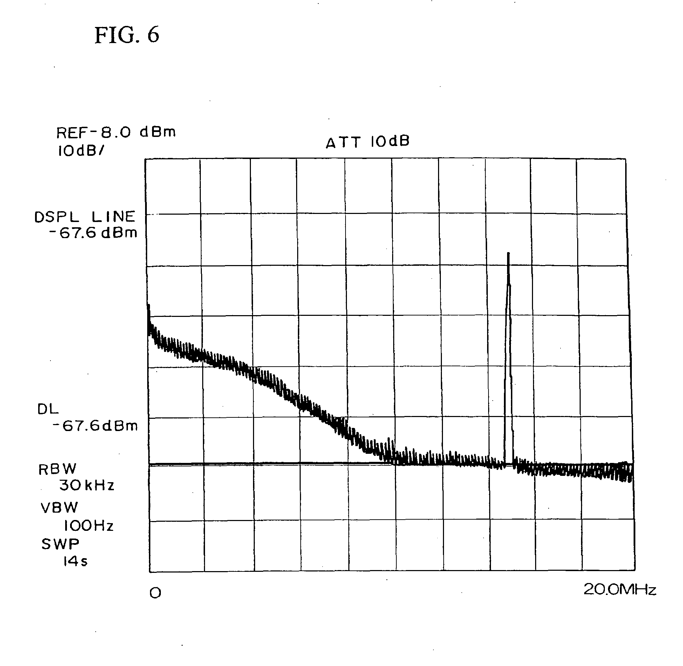

   Figure 6 is a diagram showing the frequency spectrum of a reproduced signal obtained from an optical recording disc sample # 1 displayed on the screen of a spectrum analyzer.
[FIGURE 7]

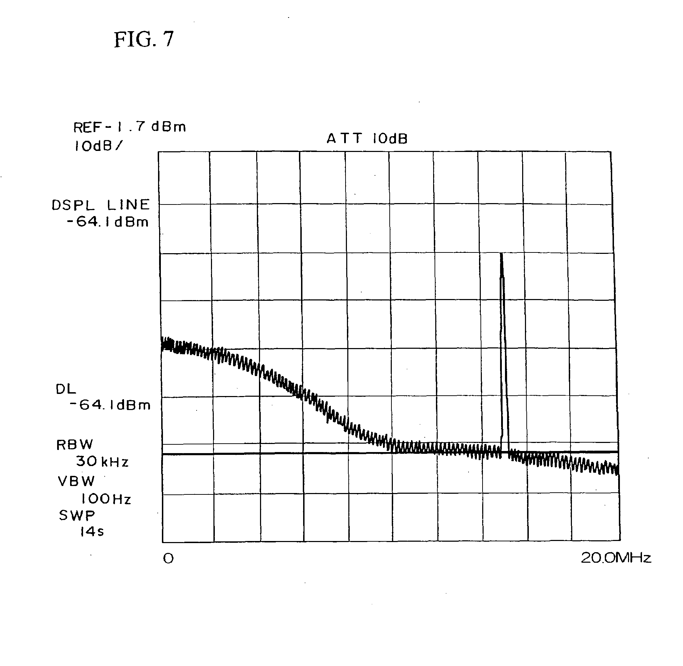

   Figure 7 is a diagram showing the frequency spectrum of a reproduced signal obtained from an optical recording disc sample # 2 displayed on the screen of a spectrum analyzer.
[FIGURE 8]

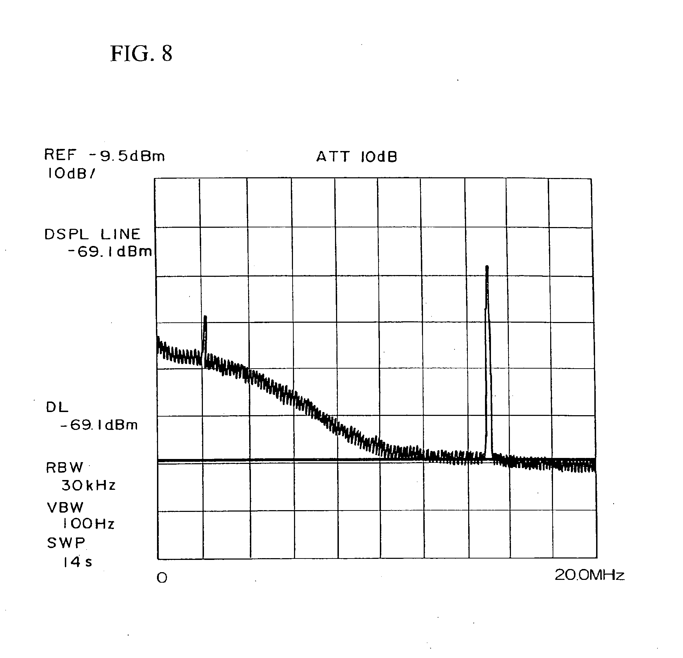

   Figure 8 is a diagram showing the frequency spectrum of a reproduced signal obtained from an optical recording disc sample # 3 displayed on the screen of a spectrum analyzer.
[FIGURE 9]

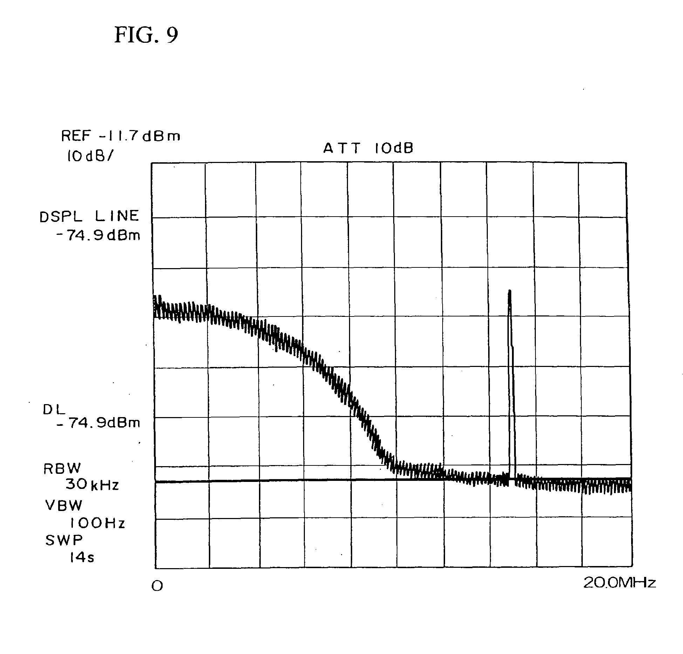

   Figure 9 is a diagram showing the frequency spectrum of a reproduced signal obtained from an optical recording disc sample # 4 displayed on the screen of a spectrum analyzer.
[FIGURE 10]

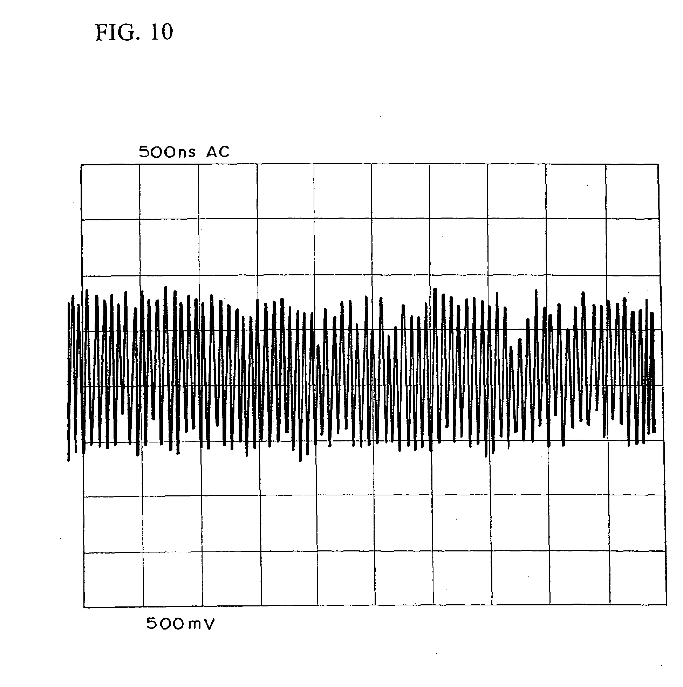

   Figure 10 is a diagram showing the waveform of a reproduced signal of an optical recording disc sample # 1 displayed on the screen of an oscilloscope.
[FIGURE 11]

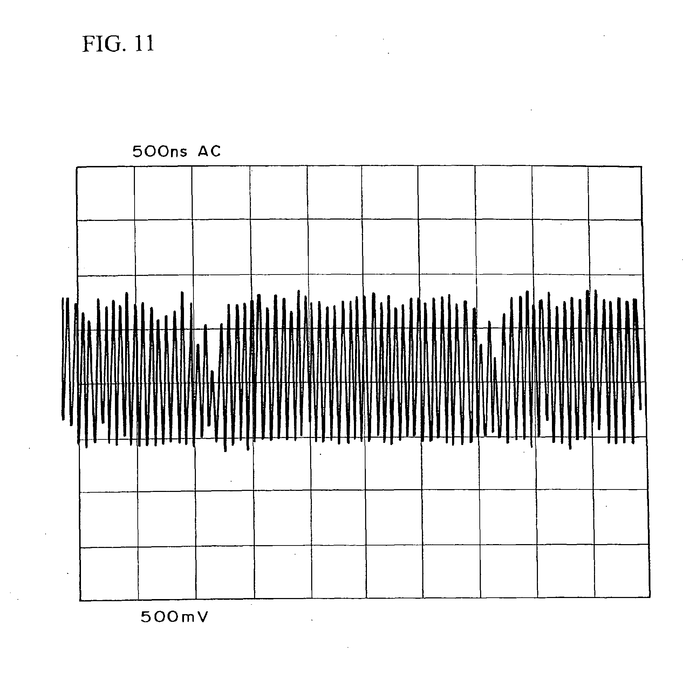

   Figure 11 is a diagram showing the waveform of a reproduced signal of an optical recording disc sample # 2 displayed on the screen of an oscilloscope.
[FIGURE 12]

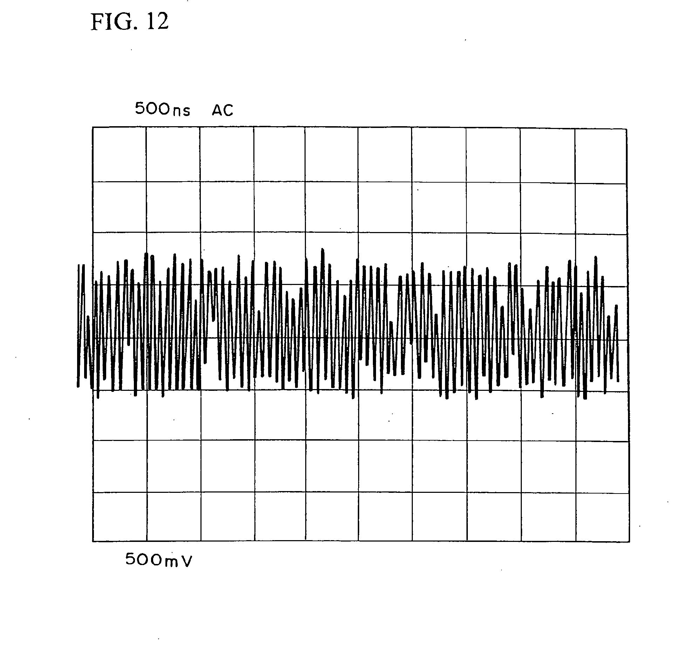

   Figure 12 is a diagram showing the waveform of a reproduced signal of an optical recording disc sample # 3 displayed on the screen of an oscilloscope.

### [EXPLANATION OF REFERENCE NUMERALS]

- 1: an optical recording disc
- 2: a light transmissible substrate
- 4: a first dielectric layer
- 5: a decomposition reaction layer
- 6: a second dielectric layer
- 7: a light absorbing layer
- 8: a third dielectric layer
- 10: an optical recording disc
- 12: a support substrate
- 13: a light transmission layer

### [DESCRIPTION OF THE PREFERRED EMBODIMENTS]

Hereinafter, preferred embodiments of the present invention will be described in detail with reference to accompanying drawings.

Figure 1 is a schematic cross sectional view showing an optical recording disc that is a preferred embodiment of the present invention and Figure 2 is an enlarged schematic cross-sectional view of the part of the optical recording disc in Figure 1 indicated by A.

As shown in Figure 2, an optical recording disc 1 according to this embodiment includes a light transmissible substrate 2, and a first dielectric layer 4, a decomposition reaction layer 5, a second dielectric layer 6, a light absorption layer 7 and a third dielectric layer 8 laminated on the light transmissible substrate 2 in this order.

As shown in Figure 2, in this embodiment, the optical recording disc 1 is constituted so that data are recorded therein and recorded data are reproduced therefrom by irradiating the optical recording disc 1 with a laser beam L from the side of the light transmissible substrate 2. The laser beam L has a wavelength of 635 nm to 660 nm and is converged onto the optical recording disc 1 using an objective lens having a numerical aperture of 0.59 to 0.66.

The light transmissible substrate 2 is a layer through which the laser beam L is transmitted when data are to be recorded in the decomposition reaction layer 5 and data recorded in the decomposition reaction layer 5 are to be reproduced. It serves as a support of the optical recording disc 1 for ensuring mechanical strength required for the optical recording disc 1.

The light transmissible substrate 2 is formed disc-like so as to have a thickness of about 0.6 mm that depends upon the design of an optical system used for recording and reproducing data.

One of the major surfaces of the light transmissible substrate 2 constitutes a light incidence plane through which the laser beam L enters, and grooves (not shown) and lands (not shown) are spirally formed on the other major surface of the light transmissible substrate 2 so as to extend from a portion in the vicinity of the center of the light transmissible substrate 2 toward the outer circumference.

The grooves and/or lands serve as a guide track for the laser beam L when data are to be recorded in the decomposition reaction layer 5 and data recorded in the decomposition reaction layer 5 are to be reproduced.

The material usable for forming the light transmissible substrate 2 is not particularly limited insofar as it has optical transparency with respect to a laser beam having a wavelength of 635 nm to 660 nm and can serve as a support of the optical recording disc 1. The light transmissible substrate 2 can be formed of glass, ceramic, resin or the like. Illustrative examples of resins suitable for forming the light transmissible substrate 2 include polycarbonate resin, polyolefin resin, acrylic resin, epoxy resin, polystyrene resin, polyethylene resin, polypropylene resin, silicone resin, fluoropolymers, acrylonitrile butadiene styrene resin, urethane resin and the like. Among these, polycarbonate resin and polyolefin resin are most preferably used for forming the light transmissible substrate 2 from the viewpoint of easy processing, optical characteristics and the like.

As shown in Figure 2, the first dielectric layer 4 is formed on the surface of the light transmissible substrate 2 of the optical recording disc 1.

In this embodiment, the first dielectric layer 4 serves to physically and chemically protect the decomposition reaction layer 5 as described later and the light transmissible substrate 2.

The dielectric material usable for forming the first dielectric layer 4 is not particularly limited and the first dielectric layer 4 can be formed of a dielectric material containing oxide, sulfide, nitride or the combination thereof as a primary component. It is preferable to form the first dielectric layer 4 of oxide, nitride, sulfide or fluoride containing at least one element selected from a group consisting of Si, Zn, Al, Ta, Ti, Co, Zr, Pb, Ag, Sn, Ca, Ce, V, Cu, Fe and Mg, or a combination thereof.

The thickness of the first dielectric layer 4 is not particularly limited but it is preferable to form the first dielectric layer 4 so as to have a thickness of 5 nm to 300 nm.

As shown in Figure 2, the decomposition reaction layer 5 is formed on the surface of the first dielectric layer 4 of the optical recording disc 1.

In this embodiment, the decomposition reaction layer 5 serves as a recording layer and a recording mark is formed in the decomposition reaction layer 5 when data are to be recorded in the optical recording disc 1.

In this embodiment, the decomposition reaction layer 5 contains platinum oxide (PtOₓ) as a primary component.

In this embodiment, it is particularly preferable for xto be equal to or larger than 1.0 and smaller than 3.0 in order to obtain a reproduced signal having a high C/N ratio even in the case where the length of a recording mark or the length of a blank region between neighboring recording marks is shorter than the resolution limit.

The decomposition reaction layer 5 is formed so as to have a thickness of 2 nm to 20 nm and is preferably formed so as to have a thickness of 4 nm to 20 nm. However, the thickness of the decomposition reaction layer 6 is not particularly limited insofar as it falls within this range.

It is thought that in the case where the thickness of the decomposition reaction layer 5 is too thin, the decomposition reaction layer 5 sometimes cannot be formed as a continuous film, and on the other hand, that in the case where the thickness of the decomposition reaction layer 5 is too thick, the decomposition reaction layer 5 does not readily deform and it becomes difficult to form a bubble pit having a desired shape as the length of a recording mark to be formed becomes shorter. Thus, it is preferable to form the decomposition reaction layer 5 so as to have a thickness of 2 nm to 20 nm and it is more preferable to form it so as to have a thickness of 4 nm to 20 nm.

As shown in Figure 2, the second dielectric layer 6 is formed on the surface of the decomposition reaction layer 5 of the optical recording disc 1.

In this embodiment, the second dielectric layer 6 serves to physically and chemically protect the decomposition reaction layer 5 and the light absorption layer 7 as described later.

The material usable for forming the second dielectric layer 6 is not particularly limited and the second dielectric layer 6 can be formed of the same material as that for forming the first dielectric layer 4, for example.

It is preferable to form the second dielectric layer 6 so as to have a thickness of 5 nm to 100 nm.

As shown in Figure 2, the light absorption layer 7 is formed on the surface of the second dielectric layer 6 of the optical recording disc 1.

In this embodiment, the light absorption layer 7 serves to absorb a laser beam 20 whose power is set to the recording power and which is irradiated onto the optical recording disc 1, generate heat and transfer the thus generated heat to the decomposition reaction layer 5.

In this embodiment, the light absorption layer 7 is formed of an alloy containing one of Sb and Te having a high light absorption coefficient and low thermal conductivity.

As an alloy contained in the light absorption layer 7 and containing one of Sb and Te, an alloy represented by the general formula: (SbₐTe₁₋ₐ)_{1-b}M_{b} or {(GeTe)_{c}(Sb₂Te₃)_{1-c}}_{d}X_{1-d} is particularly preferable. Here, the element M represents an element other than Sb and Te and the element X represents an element other than Sb, Te and Ge.

In the case where the alloy which contains at least one of Sb and Te and is contained in the light absorption layer 7 is represented by the general formula: (SbₐTe₁₋ₐ)_{1-b}M, it is preferable for ***a*** and ***b*** to be such that ***a*** is equal to or larger than 0 and equal to or smaller than 1 and that ***b*** is equal to or larger than 0 and equal to or smaller than 0.25. In the case where ***b*** is larger than 0.25, the light absorption coefficient of the light absorption layer 7 becomes lower than the required value and the thermal conductivity thereof becomes lower than the required value required.

The element M is not particularly limited but it is preferable for the element M to be at least one element selected from a group consisting of In, Ag, Au, Bi, Se, Al, Ge, P, H, Si, C, V, W, Ta, Zn, Mn, Ti, Sn, Pb, Pd, N, O and rare earth elements (Sc, Y and lanthanoid) as a primary component.

On the other hand, in the case where the alloy contained in the light absorption layer 7 and containing at least one of Sb and Te is represented by the general formula: {(GeTe)_{c}(Sb₂Te₃)_{1-c}}_{d}X_{1-d}, it is preferable for ***c*** and ***d*** to be such that ***c*** is equal to or larger than 1/3 and equal to or smaller than 2/3 and ***d*** is equal to or larger than 0.9.

The element X is not particularly limited but it is preferable for the element M to be at least one element selected from a group consisting of In, Ag, Au, Bi, Se, Al, P, H, Si, C, V, W, Ta, Zn, Mn, Ti, Sn, Pb, Pd, N, O and rare earth elements as a primary component.

It is preferable for the light absorption layer 7 to have a thickness of 5 nm to 100 nm. In the case where the thickness of the light absorption layer 7 is smaller than 5 nm, the amount of light absorbed therein becomes too small and on the other hand, in the case where the thickness of the light absorption layer 7 is larger than 100 nm, the light absorption layer 7 does not readily deform when a bubble pit is formed in the decomposition reaction layer 5 as described later.

As shown in Figure 2, the third dielectric layer 8 is formed on the surface of the light absorption layer 7 of the optical recording disc 1.

In this embodiment, the third dielectric layer 8 serves to physically and chemically protect the light absorption layer 7 in cooperation with the second dielectric layer 6.

The material usable for forming the third dielectric layer 8 is not particularly limited and the third dielectric layer 8 can be formed of the same material as that for forming the first dielectric layer 4, for example.

The thickness of the third dielectric layer 8 is not particularly limited but it is preferable to form the third dielectric layer 8 so as to have a thickness of 5 nm to 300 nm.

The optical recording disc 1 having the above-described configuration can, for example, be fabricated in the following manner.

The light transmissible substrate 2 having the grooves and the lands on the surface thereof is first fabricated by an injection molding process.

The first dielectric layer 4 is then formed on the surface of the light transmissible substrate 2 on which the grooves and the lands are formed. The first dielectric layer 4 can be formed on the surface of the light transmissible substrate 2 by a gas phase growth process using chemical species containing elements for forming the first dielectric layer 4. Illustrative examples of the gas phase growth processes include a vacuum deposition process, a sputtering process and the like.

Further, the decomposition reaction layer 5 is formed on the surface of the first dielectric layer 4. The decomposition reaction layer 5 can be formed on the surface of the first dielectric layer 4 by a gas phase growth process using chemical species containing elements for forming the decomposition reaction layer 5.

In this embodiment, a reactive sputtering process is employed as the gas phase growth process and a target containing platinum as a primary component is sputtered in a mixed gas atmosphere of an Ar gas and an oxygen gas, whereby the decomposition reaction layer 5 containing platinum oxide as a primary component is formed.

In the case where the decomposition reaction layer 5 is formed by reactive sputtering, basic conditions for forming the decomposition reaction layer 5 are: film forming power, i.e., the power applied to the target, more specifically, the power density or the power applied to the target per unit area of the target; gas pressure, i.e., the pressure within a chamber during introduction of an Ar gas and an oxygen gas into the chamber to prepare a mixed gas of the Ar gas and the oxygen gas; and ratio between the Ar gas and the oxygen gas contained in the mixed gas. In this embodiment, the decomposition reaction layer 5 is formed by controlling the film forming power and the gas pressure so that fine particles of platinum having a particle diameter of 2 nm to 15 nm precipitate when a recording mark is formed.

Then, the second dielectric layer 6 is formed on the surface of the decomposition reaction layer 5. The second dielectric layer 6 can be formed on the surface of the decomposition reaction layer 5 by a gas phase growth process using chemical species containing elements for forming the second dielectric layer 6. Illustrative examples of the gas phase growth processes include a vacuum deposition process, a sputtering process and the like.

Further, the light absorption layer 7 is formed on the surface of the second dielectric layer 6. The light absorption layer 7 can be formed on the surface of the second dielectric layer 6 by a gas phase growth process using chemical species containing elements for forming the light absorption layer 7. Similarly to the case of forming the first dielectric layer 4, illustrative examples of the gas phase growth processes include a vacuum deposition process, a sputtering process and the like.

Then, the third dielectric layer 8 is formed on the surface of light absorption layer 7. The third dielectric layer 8 can be formed on the surface of light absorption layer 7 by a gas phase growth process using chemical species containing elements for forming the third dielectric layer 8. Similarly to the case of forming the first dielectric layer 4, illustrative examples of the gas phase growth processes include a vacuum deposition process, a sputtering process and the like.

Thus, the optical recording disc 1 is manufactured.

Data are recorded in and reproduced from the thus constituted optical recording disc 1 as set out in the following.

Figure 3 (a) is a partly enlarged schematic cross-sectional view of the optical recording disc 1 before data were recorded therein and Figure 3 (b) is a partly enlarged schematic cross-sectional view of the optical recording disc 1 after data were recorded therein.

When data are to be recorded in the optical recording disc 1, the optical recording disc 1 is irradiated with a laser beam L from the side of the light transmissible substrate 2.

In this embodiment, the laser beam L having a wavelength λ of 635 nm to 660 nm is converged onto the optical recording disc 1 using an objective lens having a numerical aperture NA of 0.59 to 0.66.

The power of the laser beam L is determined so as to be higher than 4 mW and equal to or lower than 30 mW. Here, the power of the laser beam L is defined as the power of the laser beam L on the surface of the optical recording disc 1.

When the optical recording disc 1 is irradiated from the side of the light transmissible substrate 2 with the laser beam L whose power is set to the recording power, since the light absorption layer 7 is formed of an alloy containing one of Sb and Te having a high light absorption coefficient, the region of the light absorption layer 7 irradiated with the laser beam L is heated.

Heat generated in the light absorption layer 7 is transferred to the decomposition reaction layer 5 and the temperature of the decomposition reaction layer 6 increases. Thus, the decomposition reaction layer 5 is heated to a temperature equal to or higher than the decomposition temperature of the platinum oxide contained in the decomposition reaction layer 5 as a primary component is decomposed into platinum and oxygen.

As a result, as shown in Figure 3 (b), a bubble pit 5a is formed in the decomposition reaction layer 5 by an oxygen gas generated by the decomposition of the platinum oxide and fine particles 5b of platinum precipitate into the bubble pit 5a.

In this embodiment, the fine particles 5b of platinum thus precipitated into the bubble pit 5a have a particle diameter of 2 nm to 15 nm. Here, the fine particle 5b of platinum is assumed to be a sphere and its particle diameter is defined as the diameter of the sphere.

In the aforesaid study done by the inventors of the present invention, it was found that when the platinum oxide contained in the decomposition reaction layer 5 as a primary component was decomposed into platinum and oxygen, the bubble pit 5a was formed in the decomposition reaction layer 5 by the thus produced oxygen gas, and the fine particles 5b of platinum precipitated into the bubble pit 5a, thereby forming a recording mark and recording data in the optical recording disc 1, it was possible in the case where the fine particles 5b of platinum had a particle diameter of 2 nm to 15 nm to suppress the level of a noise signal contained in a signal obtained by reproducing data recorded in the optical recording disc 1 and simultaneously suppress variation of the amplitude of the reproduced signal.

As shown in Figure 3 (b), in this embodiment, the second dielectric layer 6 and the light absorption layer 7 are at the same time deformed together with the decomposition reaction layer 5 by the pressure of the oxygen gas.

Since the region where the bubble pit 5a is formed and the decomposition reaction layer 5, the second dielectric layer 6 and the light absorption layer 7 are deformed in this manner has different optical properties from those of other regions, a recording mark is constituted by the region where the bubble pit 6a is formed and the decomposition reaction layer 5, the second dielectric layer 6 and the light absorption layer 7 are deformed.

In this embodiment, thus formed recording marks and blank regions between neighboring recording marks include ones having a length shorter than λ / 4NA and a recording mark train including recording marks and blank regions having lengths shorter than the resolution limit is formed.

Further, in this embodiment, the decomposition reaction layer 5 contains platinum oxide having a high decomposition temperature as a primary component, so that when the optical recording disc 1 is irradiated with a laser beam L whose power is set to the recording power to form a recording mark, it is possible to prevent the decomposition reaction of platinum oxide from occurring in regions other than the region irradiated with the laser beam L even if heat is diffused from the region of the decomposition reaction layer 5 irradiated with the laser beam L to regions of the decomposition reaction layer 5 therearound. Therefore, it is possible to form the bubble pit 5a at a desired region of the decomposition reaction layer 5 to form a recording mark therein.

Furthermore, in this embodiment, when the platinum oxide contained in the decomposition reaction layer 5 as a primary component is decomposed into platinum and oxygen, the bubble pit 5a is formed in the decomposition reaction layer 5 by the thus produced oxygen gas, and the fine particles 5b of platinum precipitate into the bubble pit 5a, thereby forming a recording mark and recording data in the optical recording disc 1, the fine particles 5b of platinum come to have a particle diameter of 2 nm to 15 nm. Therefore, it is possible to suppress the level of a noise signal contained in a signal obtained by reproducing data recorded in the optical recording disc 1 and simultaneously suppress variation of the amplitude of the reproduced signal.

Thus, data are recorded in the optical recording disc 1. Data recorded in the optical recording disc 1 are reproduced in the following manner.

When data recorded in the optical recording disc 1 are to be reproduced, the laser beam L having a wavelength λ of 635 nm to 660 nm is first converged onto the optical recording disc 1 using an objective lens having a numerical aperture NA of 0.59 to 0.66.

In this embodiment, the power of the laser beam L used for reproducing data from the optical recording disc 1 is set higher than usual and normally set to 1 mW to 5 mW.

In a study done by the inventors of the present invention, it was found that in the case where the optical recording disc 1 is irradiated with the laser beam L having a wavelength λ of 635 nm to 660 nm using an objective lens having a numerical aperture NA of 0.59 to 0.66 from the side of the light transmissible substrate 2, data can be reproduced even when the length of a recording mark or the length of a blank region between neighboring recording marks constituting a recording mark train is shorter than the resolution limit.

Although it is not altogether clear why, in the case where the platinum oxide contained in the decomposition reaction layer 5 as a primary component is decomposed into platinum and oxygen, a bubble pit 5a is formed in the decomposition reaction layer 5 and fine particles 5b of platinum precipitate into the bubble pit 5a by the thus generated oxygen gas, thereby forming a recording mark in the decomposition reaction layer 5 and recording data in the optical recording disc 1, whereby it is possible to reproduce data recorded in the optical recording disc 1 even in the case where the length of a recording mark or the length of a blank region between neighboring recording marks constituting a recording mark train is shorter than the resolution limit, it is reasonable to conclude that near-field light is generated by irradiating the fine particles 5b of platinum precipitated into the bubble pit 5a with the laser beam L and the resolution limit disappears or that the resolution limit becomes smaller due to the interaction between the fine particles 5b of platinum precipitated into the bubble pit 5a and the laser beam L with which the fine particles 5b of platinum are irradiated.

In this embodiment, since the decomposition reaction layer 5 contains the platinum oxide whose decomposition temperature is high as a primary component, even when data are to be reproduced by irradiating the optical recording disc 1 with the laser beam L for reproducing data having a high power, there is no risk of platinum oxide decomposing into platinum and oxygen. Therefore, even in the case of repeatedly reproducing data recorded in the optical recording disc 1, a bubble pit 5a can be formed without change in the shape of a recording mark and a new bubble pit is not formed at regions other than the region where the recording mark is formed. Accordingly, it is possible to improve the reproduction durability of the optical recording disc 1.

Figure 4 is a schematic perspective view showing an optical recording disc which is another preferred embodiment of the present invention and Figure 5 is an enlarged schematic cross-sectional view of the part of the optical recording disc in Figure 4 indicated by B within a cross section taken along the track of the optical recording disc.

As shown in Figure 5, an optical recording disc 10 according to this embodiment includes a support substrate 12, and a third dielectric layer 8, a light absorption layer 7, a second dielectric layer 6, a decomposition reaction layer 5, a first dielectric layer 4 and a light transmission layer 13 are laminated on the support substrate 12 in this order.

As shown in Figure 5, in this embodiment, the optical recording disc 10 is constituted so that data are recorded and data recorded therein are reproduced by being irradiated with a laser beam L from the side of the light transmission layer 9. The laser beam L has a wavelength of 390 nm to 420 nm and is converged onto the optical recording disc 1 using an objective lens having a numerical aperture of 0.70 to 0.90.

The support substrate 12 serves as a support of the optical recording disc 10 for ensuring mechanical strength required for the optical recording disc 10.

The material used to form the support substrate 12 is not particularly limited insofar as the support substrate 12 can serve as the support of the optical recording disc 10. Similarly to the light transmissible substrate 2 shown in Figure 2, the support substrate 12 can be formed of glass, ceramic, resin or the like.

In this embodiment, the support substrate 12 is formed of polycarbonate resin and has a thickness of about 1.1 mm.

The light transmission layer 13 is a layer through which the laser beam L is transmitted and the surface thereof forms a light incidence plane of the laser beam L.

The material for forming the light transmission layer 13 is not particularly limited insofar as it is optically transparent and has a low absorption ratio and a reflectivity with respect to a laser beam having a wavelength of 390 nm to 420 nm of the wavelength of the laser beam L, and a low birefringence factor. In the case where the light transmission layer 13 is formed using a spin coating method or the like, an ultraviolet ray curable resin, an electron beam curable resin, a thermosetting resin or the like can be used for forming the light transmission layer 13 and an activated energy ray curable type resin such as an ultraviolet ray curable resin and an electron beam curable resin is most preferably used for forming the light transmission layer 13.

The light transmission layer 13 may be formed by adhering a sheet formed of light transmittable resin onto the surface of the first dielectric layer 4 using an adhesive agent.

In the case where the light transmission layer 13 is formed using a spin coating method, the thickness thereof is preferably 10 µm to 200 µm and in the case where the light transmission layer 13 is formed by adhering a sheet formed of light transmittable resin onto the surface of the first dielectric layer 4 using an adhesive agent, the thickness thereof is preferably 50 µm to 150 µm.

Data are recorded in and reproduced from the thus constituted optical recording disc 10 as set out in the following.

When data are to be recorded in the optical recording disc 10, the optical recording disc 1 is irradiated with a laser beam L from the side of the light transmission layer 13.

In this embodiment, the laser beam L having a wavelength λ of 390 nm to 420 nm is converged onto the optical recording disc 1 using an objective lens having a numerical aperture NA of 0.7 to 0.9.

When the optical recording disc 1 is irradiated with the laser beam L whose power is set to the recording power, the decomposition reaction layer 5 is heated to a temperature equal to or higher than the decomposition temperature of platinum oxide and the platinum oxide contained in the decomposition reaction layer 5 as a primary component is decomposed into platinum and oxygen.

As a result, similarly to in the optical recording disc 10 and as shown in Figure 3, a bubble pit 5a is formed in the decomposition reaction layer 5 by an oxygen gas generated by the decomposition of the platinum oxide and fine particles 5b of platinum having a particle diameter of 2 nm to 15 nm precipitate into the bubble pit 5a. At the same time, the second dielectric layer 6 and the light absorption layer 7 are deformed together with the decomposition reaction layer 5 by the pressure of the oxygen gas.

Data thus recorded in the optical recording disc 10 are reproduced by converging the laser beam having a wavelength λ of 390 nm to 420 nm onto the optical recording disc 10 using the objective lens having a numerical aperture NA of 0.7 to 0.9 and detecting the laser beam reflected from the optical recording disc 10.

As described above, according to this embodiment, if a recording mark is formed in the decomposition reaction layer 5 by forming the bubble pit in the decomposition reaction layer 5 and precipitating platinum fine particles into the bubble pit, data can be reproduced even when the lengths of a recording mark and a blank region between neighboring recording marks which constitute a recording mark train are shorter than the resolution limit. Therefore, since it is possible to record data in the optical recording disc 10 at a high density, it is possible to markedly increase the storage capacity of the optical recording disc 10.

Further, according to this embodiment, when the platinum oxide contained in the decomposition reaction layer 5 as a primary component is decomposed into platinum and oxygen, the bubble pit 5a is formed in the decomposition reaction layer 5 by the thus produced oxygen gas, the fine particles 5b of platinum precipitate into the bubble pit 5a, thereby forming a recording mark and recording data in the optical recording disc 1, each of the fine particles 5b of platinum has a particle diameter of 2 nm to 15 nm. Therefore, it is possible to suppress the level of a noise signal contained in a signal obtained by reproducing data recorded in the optical recording disc 1 and simultaneously suppress the variation of the amplitude of the reproduced signal.

### WORKING EXAMPLES

Hereinafter, a working example and a comparative example will be set out in order to further clarify the advantages of the present invention.

A light transmissible substrate having a thickness of 0.6 mm and a diameter of 120 mm was set in a sputtering apparatus "CFS-4ES-231" (Product Name) manufactured by SHIBAURA MECHATORONICS CORPORATION and a first dielectric layer having a thickness of 130 nm was formed on the light transmissible substrate by a sputtering process using a target of a mixture of ZnS and SiO₂. The mole ratio of ZnS to SiO₂ in the mixture of ZnS and SiO₂ used as the target was 85:15.

Then, a decomposition reaction layer containing platinum as a primary component and having a thickness of 4 nm was formed on the surface of the second dielectric layer by a sputtering process using a mixed gas of an Ar gas and an oxygen gas as a sputtering gas and a Pt target. When the decomposition reaction layer was to be formed, the flow ratio between the Ar gas and the oxygen gas was set to 10:2.5, the film forming power of the sputtering apparatus was set to 50 W, the power density, i.e., the power applied to the target per unit area of the target, was set to 1.09 W/cm² and the gas pressure, i.e., the pressure within the chamber during introduction of the Ar gas and the oxygen gas, was set to 0.5 Pa.

Further, a second dielectric layer having a thickness of 40 nm was then formed on the surface of the decomposition reaction layer by a sputtering process using a target of a mixture of ZnS and SiO₂. The mole ratio of ZnS to SiO₂ in the mixture of ZnS and SiO₂ used as the target was 85:15.

Then, a light absorption layer having a thickness of 60 nm was formed on the surface of the second dielectric layer by a sputtering process using a target of alloy having a composition Ag_{6.0}In_{5.5}Sb_{60.8}Te_{28.7}. The composition of the light absorption layer was Ag_{6.0}In_{5.5}Sb_{60.8}Te_{28.7} in terms of atomic ratios similarly to that of the target.

Furthermore, a third dielectric layer having a thickness of 100 nm was then formed on the surface of the light absorption layer by a sputtering process using a target of a mixture of ZnS and SiO₂. The mole ratio of ZnS to SiO₂ in the mixture of ZnS and SiO₂ used as the target was 85:15.

Thus, an optical recording disc sample # 1 was fabricated.

The thus fabricated optical recording disc sample # 1 was set in an optical recording medium evaluation apparatus "DDU1000" (Product Name) manufactured by Pulstec Industrial Co., Ltd. and the optical recording disc sample # 1 was irradiated with a red laser beam having a wavelength λ of 635 nm using an objective lens having an NA (numerical aperture) of 0.60 from the side of the light transmissible substrate, thereby forming recording marks in the decomposition reaction layer of the optical recording disc sample # 1 under the following conditions so that the lengths of the recording marks were 200 nm. The recording power of the laser beam was set to 11.0 mW.

Recording linear velocity: 6.0 m/sec
Recording format: on-groove recording
After forming the recording marks, the state of the decomposition reaction layer of the optical recording disc sample # 1 was observed using a transmission electron microscope and the particle size of fine particles of platinum precipitated into a bubble pit formed in the decomposition reaction layer was measured. As a result, it was found that the fine particles of platinum had a particle diameter of 9.8 nm. Here, the particle diameter of the fine particles of platinum was determined by selecting about ten fine particles of platinum in a random manner from among the many fine particles of platinum precipitated into the bubble pit in the decomposition reaction layer, measuring the particle diameters of the about ten fine particles of platinum and calculating the average value of the measured particle diameters. Further, the fine particles of platinum were assumed to be spheres and their particle diameters were defined as the diameters of the spheres.

Then, an optical recording disc sample # 2 was fabricated in the manner of fabricating the optical recording disc sample # 1 except that the film forming power of the sputtering apparatus was set to 100 W, the power density was set to 2.19 W/cm² and the gas pressure, i.e., the pressure within the chamber during introduction of the Ar gas and the oxygen gas, was set to 2.0 Pa when the decomposition reaction layer was to be formed.

Recording marks were formed in the thus fabricated optical recording disc sample # 2 using the above mentioned optical recording medium evaluation apparatus in the manner of forming the recording marks in the optical recording disc sample # 1, thereby recording data in the optical recording disc sample # 2. Here, the recording power of the laser beam was set to 14.0 mW.

After forming the recording marks, the state of the decomposition reaction layer of the optical recording disc sample # 2 was observed using a transmission electron microscope and the particle size of fine particles of platinum precipitated into a bubble pit formed in the decomposition reaction layer was measured. As a result, it was found that the fine particles of platinum had a particle diameter of 8.2 nm.

Then, an optical recording disc sample # 3 was fabricated in the manner of fabricating the optical recording disc sample # 1 except that the film forming power of the sputtering apparatus was set to 100 W, the power density was set to 2.19 W/cm² and the gas pressure, i.e., the pressure within a chamber during introduction of the Ar gas and the oxygen gas, was set to 0.5 Pa when the decomposition reaction layer was to be formed.

Recording marks were formed in the thus fabricated optical recording disc sample # 3 using the above mentioned optical recording medium evaluation apparatus in the manner of forming the recording marks in the optical recording disc sample # 1, thereby recording data in the optical recording disc sample # 3. Here, the recording power of the laser beam was set to 10.0 mW.

After forming the recording marks, the state of the decomposition reaction layer of the optical recording disc sample # 3 was observed using a transmission electron microscope and the particle size of fine particles of platinum precipitated into a bubble pit formed in the decomposition reaction layer was measured. As a result, it was found that the fine particles of platinum had a particle diameter of 14.1 nm.

Then, an optical recording disc sample # 4 was fabricated in the manner of fabricating the optical recording disc sample # 1 except that the film forming power of the sputtering apparatus was set to 200 W, the power density was set to 4.39 W/cm² and the gas pressure, i.e., the pressure within the chamber during introduction of the Ar gas and the oxygen gas, was set to 0.5 Pa when the decomposition reaction layer was to be formed.

Recording marks were formed in the thus fabricated optical recording disc sample # 4 using the above mentioned optical recording medium evaluation apparatus in the manner of forming the recording marks in the optical recording disc sample # 1, thereby recording data in the optical recording disc sample # 4. Here, the recording power of the laser beam was set to 8.0 mW.

After forming the recording marks, the state of the decomposition reaction layer of the optical recording disc sample # 4 was observed using a transmission electron microscope. As a result, it was found that the fine particles of platinum were not granular but in the form of strings produced by sticking of adjacent fine particles of platinum to each other. Therefore, the particle diameter of the fine particles of platinum could not be measured.

Then, data recorded in each of the optical recording disc samples # 1 to # 4 were reproduced using the above mentioned optical recording medium evaluation apparatus and the signal characteristics of the thus reproduced signals were evaluated using a spectrum analyzer. Here, the reproducing power of the laser beam was set to 4.0 mW and the linear reproducing velocity was set to 6.0 m/sec.

The frequency spectrums of the reproduced signals obtained from the optical recording disc samples # 1 to # 4 are shown in Figures 6, 7, 8 and 9, respectively. In Figures 6, 7, 8 and 9, the ordinate axis indicates the level of the reproduced signal and the abscissa axis indicates the frequency of the reproduced signal.

Then, the waveform of the signal obtained by reproducing data recorded in each of the optical recording disc samples # 1 to # 4 was evaluated using an oscilloscope.

Waveforms of the reproduced signals obtained from the optical recording disc samples # 1 to # 3 displayed on the screen of the oscilloscope are shown in Figures 10, 11 and 12, respectively. Here, in Figures 10, 11 and 12, the ordinate axis indicates the voltage value obtained by photoelectrically converting the laser beam reflected from each of the optical recording disc samples # 1 to # 3 and the abscissa axis indicates time.

The waveform of a reproduced signal obtained from the optical recording disc sample # 4 was also displayed on the screen of the oscilloscope but was found to be very distorted and the signal characteristics of the reproduced signal obtained from the optical recording disc sample # 4 could not be properly evaluated. Thus, it was judged that it was impossible to evaluate the signal characteristics of the reproduced signal obtained from the optical recording disc sample # 4.

As apparent from Figures 6 to 9, it was found that in the case where the recording mark having a length of 200 nm was formed in the optical recording disc samples # 1 to # 3 in which fine particles of platinum having a particle diameter of 2 nm to 15 nm precipitated, thereby recording data therein, the noise intensity of the reproduced signal in the frequency band below 10 MHz, which includes frequencies lower than the 15 MHz spatial frequency of the recording mark having a length of 200 nm, was smaller than that of the optical recording disc sample # 4 in which the diameter of the fine particles of platinum could not be measured because they were not granular but string-like owing to adhesion of adjacent fine particles. It could therefore be concluded that the noise signal contained in the reproduced signal was suppressed in each of the optical recording disc samples # 1 to # 3.

Further, as apparent from Figures 10 to 12, it was found that in the optical recording disc samples # 1 to # 2 in which fine particles of platinum having a particle diameter equal to or smaller than 12 nm precipitated, the amplitude of the signal obtained by reproducing data recorded by forming a recording mark having a length of 200 nm therein was substantially constant and the variation in the amplitude of the reproduced signal was small, while in the optical recording disc sample # 3 in which fine particles of platinum having a particle diameter exceeding 12 nm precipitated, the amplitude of the signal obtained by reproducing data recorded by forming a recording mark having a length of 200 nm therein varied slightly, even though the particle diameter of the fine particles of platinum fell within the range of 2 nm to 15 nm,.

The present invention has thus been shown and described with reference to specific embodiments and a working example. However, it should be noted that the present invention is in no way limited to the details of the described arrangements but changes and modifications may be made without departing from the scope of the appended claims.

For example, although the optical recording disc 1 according to the preferred embodiment shown in Figures 1 and 2 is constituted by laminating the first dielectric layer 4, the decomposition reaction layer 5, the second dielectric layer 6, the light absorption layer 7 and the third dielectric layer 8 on the light transmissible substrate 2, the present invention is not limited to an optical recording disc having such layer configuration and a reflective layer may be formed on the surface of the third dielectric layer 8 in order to improve the reflectance with respect to the laser beam L. Further, a protect coat layer may be formed on the surface of the third dielectric layer 8 in order to protect it, and another substrate may be adhered to the surface of the third dielectric layer 8 in order to improve the rigidity of the optical recording disc 1.

Furthermore, in the optical recording disc 10 according to the preferred embodiment shown in Figure 4 and 5, similarly to in the optical recording disc 1, it is also possible to form a reflective layer between the third dielectric layer 8 and the support substrate 12 in order to improve the reflectance with respect to the laser beam L.

Moreover, in the optical recording disc 1 according to the preferred embodiment shown in Figures 1 and 2 and the optical recording disc 10 according to the preferred embodiment shown in Figures 4 and 5, although the decomposition reaction layer 5, the second dielectric layer 6 and the light absorption layer 7 are laminated in this order from the side of the light incidence plane of the laser beam L, the present invention is not limited to an optical recording disc having such layer configuration. For example, the decomposition reaction layer 5, the second dielectric layer 6 and the light absorption layer 7 may be laminated in this order from the side opposite to the light incidence plane of the laser beam L or a light absorption layer, a dielectric layer, a decomposition reaction layer, a dielectric layer and a light absorption layer may be laminated in this order from the side of the light incidence plane of the laser beam L or the side opposite to the light incidence plane of the laser beam L. In other words, in the present invention, it is sufficient for an optical recording disc to include a laminated body formed by laminating a decomposition reaction layer and a light absorbing layer so as to sandwich at least a dielectric layer.

## Claims

1. An optical recording disc constituted so as to enable recording and reproduction of data by irradiation with a laser beam, the optical recording disc comprising a laminated body formed by laminating a decomposition reaction layer containing noble metal oxide as a primary component and a light absorbing layer so as to sandwich at least a dielectric layer and being constituted so that when it is irradiated with the laser beam, a bubble pit is formed in the decomposition reaction layer and fine particles of the noble metal precipitate into the bubble pit, thereby forming a recording mark in the decomposition reaction layer, the fine particles of the noble metal having a particle diameter of 2 nm to 15 nm.

2. An optical recording disc in accordance with Claim 1, wherein the noble metal oxide contained in the decomposition reaction layer as a primary component is decomposed into a noble metal and oxygen when the decomposition reaction layer is irradiated with the laser beam.

3. An optical recording disc in accordance with Claim 2, wherein the noble metal oxide is platinum oxide and the platinum oxide is decomposed into platinum and oxygen when the decomposition reaction layer is irradiated with the laser beam via the light transmission layer.

4. An optical recording disc in accordance with Claim 2 or 3, wherein the bubble pit is formed by an oxygen gas produced when the optical recording disc is irradiated with the laser beam.

5. An optical recording disc in accordance with Claim 1, wherein the light absorption layer contains at least one of Sb and Te.

6. An optical recording disc in accordance with Claim 1, wherein the dielectric layer and the light absorption layer are deformed when the optical recording disc is irradiated with the laser beam.

7. An optical recording disc in accordance with Claim 2, wherein the dielectric layer and the light absorption layer are deformed when the bubble pit is formed in the decomposition reaction layer.

8. An optical recording disc in accordance with Claim 3, wherein the dielectric layer and the light absorption layer are deformed when the bubble pit is formed in the decomposition reaction layer.

9. An optical recording disc in accordance with Claim 4, wherein the dielectric layer and the light absorption layer are deformed when the bubble pit is formed in the decomposition reaction layer.

10. An optical recording disc in accordance with Claim 5, wherein the dielectric layer and the light absorption layer are deformed when the bubble pit is formed in the decomposition reaction layer.
